# EUROPEAN PATENT APPLICATION

(11) **EP 4 765 269 A1**
(43) Date of publication of application: **24.06.2026**
(21) Application number: 25224713.5
(22) Date of filing: 17.12.2025
(51) Int. Cl.: H01M 10/04, H01M 10/0587, H01M 50/107, H01M 50/186, H01M 50/533, H01M 50/536, H01M 50/538, H01M 50/593, H01M 50/528, H01M 50/559, H01M 10/052

(54) **SECONDARY BATTERY AND METHOD FOR MANUFACTURING SECONDARY BATTERY**

(30) Priority: 18.12.2024 KR 20240190208
(71) Applicant: SK On Co., Ltd., Seoul 03161 (KR)
(72) Inventor: JUNG, Moon Hyung, 34124 Daejeon (KR); MUN, Hak Bong, 34124 Daejeon (KR); BYUN, Jae Gyu, 34124 Daejeon (KR); CHOI, Seung Won, 34124 Daejeon (KR)
(74) Representative: Stolmár & Partner Patentanwälte PartG mbB

(57) **Abstract**

A secondary battery according to various embodiments of the present disclosure may comprise a battery can (100) in which an electrode assembly (200) is housed, and having a terminal hole (111) formed on one side thereof; an electron transfer unit (300) that is disposed inside the battery can, at least a partial region of which protrudes to the outside of the battery can through the terminal hole; and an insulation unit (400) interposed between the electron transfer unit and the battery can.

## Description

### CROSS-REFERENCE TO RELATED APPLICATION AND CLAIM OF PRIORITY

This application claims priority to Korean Patent Application No. 10-2024-0190208 filed on December 18, 2024, in the Korean Intellectual Property Office (KIPO), the entire disclosure of which is incorporated by reference herein.

### TECHINICAL FIELD

The present disclosure relates to a secondary battery and a method for manufacturing a secondary battery.

### BACKGROUND

Various types of secondary batteries are used as energy sources in electric vehicles or electronic devices. In the secondary batteries, a jelly-roll-type electrode assembly, in which an anode plate, a cathode plate and a separator are wound together, is used, or alternatively, an electrode assembly fabricated by stacking an anode plate, a cathode plate, and a separator in an appropriate order may be used.

This electrode assembly is accommodated in a battery housing and connected to an anode terminal and a cathode terminal. The housing is then sealed after being filled with an electrolyte.

### SUMMARY

The present disclosure proposes a secondary battery that facilitates foreign substance management inside the battery and a method for manufacturing a secondary battery.

A secondary battery according to various embodiments of the present disclosure may comprise: a battery can in which an electrode assembly is housed, and having a terminal hole formed on one side thereof; an electron transfer unit that is disposed inside the battery can, at least a partial region of which protrudes to the outside of the battery can through the terminal hole; and an insulation unit interposed between the electron transfer unit and the battery can.

In some embodiments, the electron transfer unit may comprise a bottom part connected to the electrode assembly inside of the battery can and a column part extending axially upward from the bottom part.

In some embodiments, the column part may comprise: a column body that is integrally formed with the bottom part, at least a portion of which is disposed inside the terminal hole; and a column arm that is bent radially outward from the column body.

In some embodiments, the bottom part may be coupled with an uncoated part of the electrode assembly.

In some embodiments, the bottom part may be disposed parallel to an upper wall of the battery can in which the terminal hole is formed, thereby limiting axial movement of the column part.

In some embodiments, the insulation unit may comprise: a body part disposed between the bottom part and the upper wall of the battery can in which the terminal hole is formed; and a neck part extending axially upward from the body part and disposed in close contact with the column part.

In some embodiments, the neck part may comprise: a first portion that extends from the body part and is in close contact with an inner circumferential surface of the terminal hole; and a second portion that extends radially outward from the first portion.

In some embodiments, the body part, the first portion and the second portion may be integrally formed to enclose at least a partial region of the upper wall.

In some embodiments, the column part, the neck part and the terminal hole may be disposed coaxially with a central axis of the battery can.

In some embodiments, the insulation unit may comprise a leg part that extends axially downward along a periphery of the body part.

In some embodiments, the leg part may be disposed between the electrode assembly and a side wall of the battery can.

In some embodiments, the insulation unit may comprise a seating space defined by a lower space of the body part and a radially inner space of the leg part, and the bottom part may be disposed in the seating space.

A device for manufacturing a secondary battery according to various embodiments of the present disclosure may comprise: a first mold configured to apply a pressing force in an axial downward direction to an electron transfer unit, which is disposed inside a battery can, at least a partial region of which protrudes to the outside of the battery can through a terminal hole; and a second mold, at least a portion of which is disposed inside the battery can to support the electron transfer unit.

In some embodiments, the second mold may be disposed to be movable in the axial direction inside a central space formed at a winding center of an electrode assembly.

In some embodiments, the electron transfer unit may comprise: a bottom part disposed on an upper side of the electrode assembly at a position corresponding to an electrode uncoated part of the electrode assembly; and a column part disposed at a position corresponding to the central space, and the second mold is disposed to support the column part in the central space.

In some embodiments, the second mold may support the electron transfer unit at a position equal to or higher than the height of the electrode uncoated part protruding from an upper side of the electrode assembly.

A method for manufacturing a secondary battery according to various embodiments of the present disclosure may comprise: an external coupling step of coupling an electron transfer unit including a column part and a bottom part, which are integrally formed, with an electrode assembly; an internal coupling step of coupling the electron transfer unit with an insulation unit inside a battery can; and a riveting step of pressing at least a portion of the electron transfer unit from outside the battery can, wherein, in the riveting step, a pressing force is applied to the column part protruding to the outside of the battery can through a terminal hole formed in an upper wall of the battery can during the internal coupling step.

In some embodiments, the insulation unit may comprise: a body part disposed between the bottom part and the upper wall; and a neck part extending from the body part and passing through the terminal hole to enclose the column part, and in the riveting step, an upper end of the neck part may be bent together with at least a partial region of the column part by the pressing force.

In some embodiments, in the riveting step, the pressing force may be applied by a first mold disposed outside the battery can, and the electron transfer unit may be supported against the pressing force by a second mold disposed inside the battery can.

According to various embodiments of the present disclosure, the process of joining components inside the battery can may be omitted, thereby facilitating the management of foreign substances within the battery can.

In addition, according to some embodiments, the number of components may be reduced by forming the electron transfer unit as a single integral unit.

Further, according to some embodiments, by forming the insulation unit as a single integral unit, it is possible to prevent the battery can from entering the space between the neck part and the body part, thereby improving insulation performance.

Further, according to some embodiments, the efficiency of the assembly process may be enhanced by performing the assembly inside the battery can through fitting between the electron transfer unit and the insulation unit.

Furthermore, according to some embodiments, by performing the riveting process for the column part of the electron transfer unit outside the battery can, deformation of the column arm may be more easily inspected, thereby achieving a reduction in the defect rate.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a partial cross-sectional view schematically illustrating a portion of an upper region of a secondary battery according to some embodiments of the present disclosure;
FIG. 2 is a cross-sectional view schematically illustrating an electron transfer unit according to some embodiments of the present disclosure;
FIG. 3 is a cross-sectional view schematically illustrating an insulation unit according to some embodiments of the present disclosure;
FIG. 4 is a view schematically illustrating a process of mounting the integrally formed electron transfer unit on an electrode assembly according to some embodiments of the present disclosure;
FIG. 5 is a view schematically illustrating a state in which a bottom part of the electron transfer unit is joined to a cathode terminal of the electrode assembly according to some embodiments of the present disclosure;
FIG. 6 is a view schematically illustrating a process of coupling a battery can, the electron transfer unit and the insulation unit according to some embodiments of the present disclosure;
FIG. 7 is a view schematically illustrating a riveting process according to some embodiments of the present disclosure; and
FIG. 8 is a flowchart of a method for manufacturing a secondary battery according to some embodiments of the present disclosure.

### DETAILED DESCRIPTION OF THE EMBODIMENTS

Embodiments of the present disclosure are provided to more fully describe the present disclosure to those skilled in the art to which the present invention pertains. The following embodiments may be modified in various forms, and the scope of the present disclosure is not limited to these embodiments.

Hereinafter, some embodiments of the present disclosure will be described through exemplary drawings for the convenience of description. When assigning reference numerals to components of respective drawings, it should be noted that the same components will be denoted by the same reference numerals, even if they appear in different drawings.

The terms or words used in this specification and the claims should not be construed as being limited to their conventional or lexical meanings, and instead, in accordance with the principle that an inventor may define the concepts of terms or words in the most appropriate manner to describe his or her invention, they should be interpreted based on the meanings and concepts that meet the technical ideas of the present disclosure.

The terms used herein are provided to describe specific embodiments and are not intended to limit the present disclosure. As used herein, the singular form may comprise the plural form unless the context clearly dictates otherwise.

In addition, when used to describe and define the present disclosure, terms such as "comprise," "comprise," "consist of," and "have" should be interpreted in a non-exclusive manner. Unless explicitly stated otherwise, these terms should be construed to imply that the presence of the corresponding component, and thus should not be interpreted to exclude the presence of other components but rather to comprise them.

In addition, in describing components of the embodiment of the present disclosure, the terms such as first, second, A, B, (a), (b), and the like may be used. These terms are used to distinguish the component from other components and do not impose any limitations on their nature, sequence or order, etc.

It will be understood that when a component is described as being "connected" or "coupled" to another component, the component may be directly connected or coupled to the other component, but it may be "connected" or "coupled" to the other component with another component possibly interposed.

Space-related terms such as "beneath," "below," "lower," "above," and "upper" may be used to facilitate understanding of the relationship between an element or feature and another element or feature illustrated in the drawings. These space-related terms are provided to facilitate understanding of the present disclosure in their various process or usage states and are not intended to impose any limitations on the present disclosure. For example, if an element or feature in the drawing is turned upside down, the element or feature described as "beneath" or "below" becomes "above" or "upper." Accordingly, the term "beneath" is a relative concept that may encompass "upper" or "below" depending on orientation.

The embodiments described in this specification and the configurations illustrated in the drawings merely represent the most preferred embodiments of the present disclosure but do not encompass all technical ideas of the present disclosure. Thus, it should be understood that various modifications and equivalents may be implemented at the time of filing the present application. In addition, the publicly known functions and configurations that are deemed unnecessary for clarifying the essence of the present invention will not be described.

Hereinafter, secondary batteries according to various embodiments of the present disclosure will be described in detail with reference to the attached drawings.

The secondary battery described in the present disclosure may be any type of conventional battery cell capable of converting the chemical energy of materials stored in the battery into electrical energy, and capable of supporting multiple charge/discharge cycles.

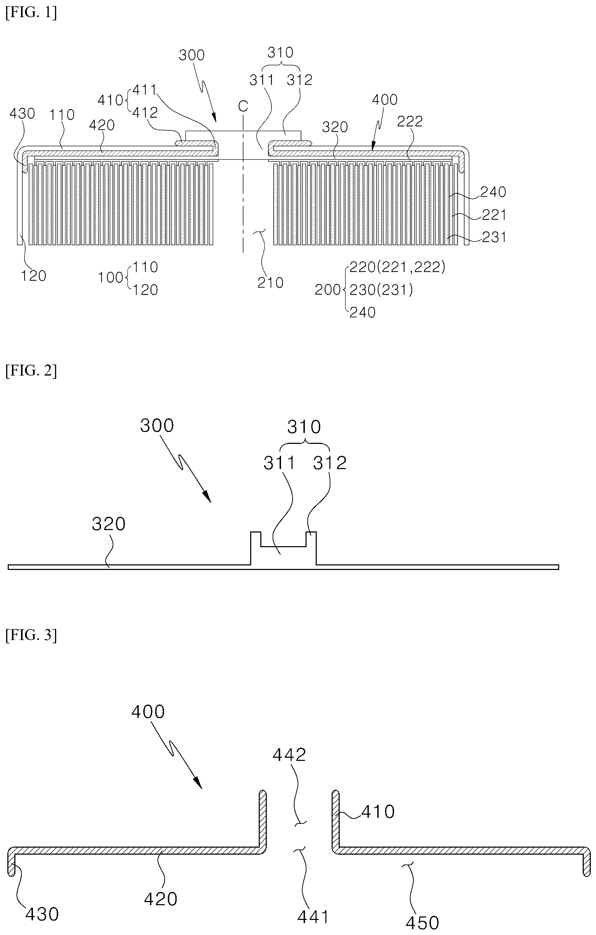

In describing various embodiments of the present disclosure, the axial direction may refer to a direction in which a central axis (e.g., axis C in FIG. 1) of a battery can 100 extends, and the radial direction may refer to a direction extending toward or away from the above-described central axis. In addition, since a jelly-roll-shaped electrode assembly 200 is disposed coaxially with the battery can 100, the axial direction may also refer to a direction parallel to the central axis along which the electrode assembly 200 is wound.

FIG. 1 is a partial cross-sectional view schematically illustrating a portion of an upper region of a secondary battery according to some embodiments of the present disclosure, FIG. 2 is a cross-sectional view schematically illustrating an electron transfer unit 300 according to some embodiments of the present disclosure, and FIG. 3 is a cross-sectional view schematically illustrating an insulation unit 400 according to some embodiments of the present disclosure.

Referring to FIGS. 1 to 3, the secondary battery according to various embodiments of the present disclosure may comprise the electrode assembly 200, the battery can 100, the electron transfer unit 300 and the insulation unit 400.

In some embodiments, the secondary battery of the present disclosure may comprise a cylindrical secondary battery, but the shape is not limited thereto.

For example, the secondary battery may comprise: the battery can 100 provided in a cylindrical shape and having a terminal hole 111 formed on one side thereof; the electron transfer unit 300 that is disposed inside the battery can 100, at least a partial region of which protrudes to the outside of the battery can 100 through the terminal hole 111; and the insulation unit 400 interposed between the electron transfer unit 300 and the battery can 100.

In addition, the secondary battery may further comprise a current collector plate (not shown) and a cap assembly (not shown).

First, the electrode assembly 200 may comprise a cathode 220, an anode 230 and a separator 240. The cathode 220 and the anode 230 may each comprise a current collector (not shown) and a coating layer formed by coating an active material onto the current collector.

The cathode 220 may comprise a cathode current collector (not shown) in the form of a metal foil and a cathode coating layer 221 formed by applying a cathode active material to the cathode current collector. For example, the cathode current collector may comprise aluminum.

The cathode coating layer 221 may be an electrically conductive coating, and may comprise a cathode active material. For example, the cathode active material may comprise lithium nickel manganese cobalt oxide (NMC), lithium manganese oxide (LMO), lithium iron phosphate (LFP), lithium cobalt oxide (LCO), lithium titanate (LTO), or a chalcogenide compound (such as LiTiS2), but is not limited thereto, and any cathode active material known to those skilled in the art may be used.

The cathode current collector may comprise a cathode uncoated part 222 on which no cathode coating layer 221 is formed. For example, the cathode uncoated part 222 may function as a cathode tab.

The cathode uncoated part 222 may be exposed to one side in the axial direction of the electrode assembly 200. For example, the cathode uncoated part 222 may be disposed on an axial upper side of the electrode assembly 200. For example, the cathode uncoated part 222 may protrude from the electrode assembly 200 in a direction opposite to the cap plate.

The cathode uncoated part 222 may be electrically connected to the electron transfer unit 300 described below. For example, the cathode uncoated part 222 may be connected to a bottom part 320 of the electron transfer unit 300.

In some embodiments, the anode 230 may comprise an anode current collector (not shown) in the form of a metal foil and an anode coating layer 231 formed by applying an anode active material to the anode current collector. For example, the anode current collector may comprise copper or nickel.

In some embodiments, the anode coating layer 231 may be an electrically conductive coating, and may comprise an anode active material. For example, the anode active material may comprise a silicon material (e.g., metallic silicon and silicon dioxide), a carbon-based material (e.g., graphite materials, graphene-containing materials, hard carbon, soft carbon, carbon nanotubes, porous carbon, or conductive carbon), a tin-based material, or a metal oxide, but is not limited thereto, and any anode active material known to those skilled in the art may be used.

The anode current collector may comprise an anode uncoated part (not shown) on which no anode coating layer 231 is formed. The anode uncoated part may function as an anode tab.

The anode uncoated part may be exposed to the other side in the axial direction of the electrode assembly 200. For example, the anode uncoated part may be disposed on an axial lower side of the electrode assembly 200. For example, the anode uncoated part may protrude from the electrode assembly 200 toward the cap plate.

For example, the anode uncoated part may be electrically connected to the current collector plate. The anode uncoated part may be electrically connected to the battery can 100 through the current collector plate.

For example, the anode uncoated part may be electrically connected to the cap plate described below. For example, the anode uncoated part may be coupled to the cap plate by a method such as laser welding. In the present disclosure, by directly coupling the anode uncoated part to the cap plate, the internal volume of the battery can 100 may be increased, thereby further enhancing the energy density.

The separator 240 may be interposed between the cathode 220 and the anode 230 to prevent the cathode 220 and the anode 230 from being electrically connected to each other and causing a short circuit. For example, the separator 240 may comprise an electrically insulating material. For example, the separator 240 may comprise a polymeric material. For example, the separator 240 may comprise polyethylene, polypropylene, or a combination thereof, but is not limited thereto.

In the present disclosure, a tabless structure may be employed in which the uncoated parts of the cathode 220 and the anode 230 serve as electrode tabs without the need for additional electrode tabs. However, the present disclosure is not limited thereto, and it is apparent that a structure in which separate electrode tabs are connected to the cathode 220 and the anode 230 may also be applied.

In some embodiments, the battery can 100 may be provided in a cylindrical shape. An accommodation space for receiving the electrode assembly 200 may be defined inside the battery can 100. At least one axial end of the battery can 100 may be formed with an opening that is open toward the outside to allow insertion of the electrode assembly 200. Here, by way of example, it will be described that a lower end of the battery can 100 is open, but it is understood that the opposite end may also be open.

The battery can 100 may comprise a conductive metal material. The battery can 100 may be electrically connected to either the cathode 220 or the anode 230. For example, the battery can 100 may be electrically connected to the anode 230 and may have the same polarity as the anode 230.

The battery can 100 may also be configured to be electrically insulated from either the cathode 220 or the anode 230. For example, when the anode 230 is electrically connected to the battery can 100, the cathode 220 may be electrically insulated from the battery can 100, thereby preventing a direct connection between the cathode 220 and the anode 230.

The battery can 100 may comprise an upper wall 110 and a side wall 120 extending downward along a periphery of the upper wall 110. For example, an opening may be formed at the lower portion of the side wall 120. For example, the upper wall 110 and the side wall 120 may be integrally formed, but are not limited thereto.

In some embodiments, the upper wall 110 of the battery can 100 may be provided in a circular plate shape. The upper wall 110 may form the upper portion of the battery can 100. The side wall 120 extending downward along the periphery may be disposed at a peripheral edge of the upper wall 110. The accommodation space for receiving the electrode assembly 200 may be defined by the upper wall 110 and the side wall 120 of the battery can 100.

At least partial regions of the electron transfer unit 300 and the insulation unit 400 may be disposed to pass through the upper wall 110.

In some embodiments, a bottom part 320 of the electron transfer unit 300 may be disposed beneath the upper wall 110. In addition, a body part 420 of the insulation unit 400 may be interposed between the upper wall 110 and the bottom part 320, thereby preventing contact between the upper wall 110 and the bottom part 320.

The terminal hole 111, through which the electron transfer unit 300 passes, as described below, may be provided in the upper wall 110 of the battery can 100. For example, the terminal hole 111 may be formed to pass through the upper wall 110 in the axial direction from one side. For example, the terminal hole 111 may be disposed at a central portion of the upper wall 110, however it is not limited thereto, and may be formed at any position on the upper wall 110 through which the electron transfer unit 300 can pass.

At least partial regions of the electron transfer unit 300 and the insulation unit 400 may be exposed to the outside of the battery can 100 through the terminal hole 111 formed in the upper wall 110. For example, the upper wall 110 may be electrically insulated from the cathode 220 of the electrode assembly 200.

For example, the terminal hole 111 may be circular, but is not limited thereto. The diameter of the terminal hole 111 may be greater than that of the column part 310. The diameter of the terminal hole 111 may be the same as the outer diameter of a neck part 410.

The terminal hole 111 of the upper wall 110 may be configured such that the column part 310 of the electron transfer unit 300 and a neck part 410 of the insulation unit 400 pass through from the accommodation space of the battery can 100 to the outside. The neck part 410 of the insulation unit 400 may be in close contact with the inner circumferential surface of the terminal hole 111. The terminal hole 111 may be fixedly coupled to the electron transfer unit 300 and the insulation unit 400 while the column part 310 and the neck part 410 are inserted through.

The battery can 100 may be sealed by the electron transfer unit 300 and the insulation unit 400 being coupled while extending through the terminal hole 111 of the upper wall 110.

The side wall 120 of the battery can 100 may extend axially downward along the peripheral edge of the upper wall 110 of the battery can 100. The accommodation space for receiving the electrode assembly 200 may be defined inside the side wall 120. The upper wall 110 may be formed on the upper portion of the side wall 120.

The side wall 120 may be electrically insulated from the electrode assembly 200 housed in the accommodation space. For example, the side wall 120 may be insulated from the cathode uncoated part 222 that protrudes axially upward from the electrode assembly 200. In the present disclosure, the battery can 100 may have a structure that is electrically connected to the anode uncoated part, and the cathode uncoated part 222 may be insulated from the battery can 100 to prevent an electrical short circuit.

For example, the inner circumferential surface of the side wall 120 may be spaced apart from the electrode assembly 200 by a predetermined gap. For example, the inner circumferential surface of the side wall 120 may be spaced apart from the cathode uncoated part 222 that protrudes upward from the electrode assembly 200.

The body part 420 of the insulation unit 400 may be disposed between the side wall 120 and the electrode assembly 200. For example, a vertical portion of the body part 420 may be disposed between the side wall 120 and the electrode assembly 200. For example, the vertical portion of the body part 420 may be positioned over at least a partial region between the side wall 120 and the electrode assembly 200. For example, the vertical portion may be disposed to cover a portion of the upper region of the side wall 120 adjacent to the upper wall 110. The side wall 120 and the electrode assembly 200 may be electrically insulated from each other by the vertical portion.

An opening that is open to the outside may be formed at a lower end of the side wall 120. The electrode assembly 200 and an electrolyte may be inserted into the accommodation space through the opening formed at the lower end of the side wall 120.

A current collector plate may be coupled to the anode 230 of the electrode assembly 200. The current collector plate may be electrically connected to the anode uncoated part. For example, the current collector plate may be coupled to the anode uncoated part by laser welding, but is not limited thereto.

For example, the current collector plate may be disposed in a shape corresponding to the lower end portion of the electrode assembly 200. For example, the current collector plate may comprise an electrode connection part formed at a position corresponding to the cathode uncoated part 222 and electrically connected thereto, and a can connection part extending from an edge of the electrode connection part and connected to the battery can 100.

The electrode connection part may be disposed to cover at least a portion of the cathode uncoated part 222. For example, the electrode connection part may be provided in a circular plate shape. For example, the electrode connection part may comprise at least one hole to reduce weight and facilitate the smooth discharge of gas. However, this is merely illustrative, and the electrode connection part may be provided in various shapes as needed.

The can connection part may extend from the periphery of the electrode connection part. The can connection part may be connected to one side of the inner circumferential surface of the battery can 100 to electrically connect the electrode connection part and the battery can 100.

For example, the can connection part may be connected to one side of a beading part of the battery can 100. However, it is not limited thereto, and the can connection part may be connected to a portion of the inner circumferential surface of the battery can 100, or the can connection part may be connected to one side of a cap assembly.

The cap assembly may be coupled to the opening formed at the lower end of the side wall 120 after the electrode assembly 200 and the electrolyte are inserted therein. The opening of the side wall 120 may then be sealed by the cap assembly.

For example, the cap assembly may comprise a cap plate and a sealing gasket. The cap plate may be electrically insulated from the battery can 100 by the sealing gasket.

The cap plate may be provided in a shape corresponding to the opening of the battery can 100. For example, the cap plate may be provided in a circular plate shape. For example, the cap plate may be electrically connected to the anode uncoated part of the electrode assembly 200 and may serve as the anode 230 terminal. However, it is not limited thereto, and the cap plate may alternatively be disposed to be electrically insulated from the electrode assembly 200.

In some embodiments, the cap plate may comprise at least one anode 230 terminal part (not shown). The anode 230 terminal part may be disposed to protrude axially downward from one side of the cap plate. For example, the anode 230 terminal part may be disposed coaxially with the central axis of the battery can 100 in the cap plate, but is not limited thereto. The secondary battery of the present disclosure may allow easy contact with an external component (e.g., a bus bar, not shown) through the anode 230 terminal part, and may provide a path for electron transfer.

In some embodiments, at least one notch part (not shown) may be provided on one side of the cap plate to facilitate rupture when the internal pressure of the battery can 100 increases. For example, the notch part may be formed in the form of a groove recessed to a predetermined depth on at least one surface of the upper or lower surface of the cap plate. For example, the notch part may be formed in the anode 230 terminal part, but is not limited thereto.

For example, a portion of the lower region of the side wall 120 forming the opening may comprise a beading part recessed radially inward, and the cap plate may be seated on the beading part.

While the cap plate is seated on the beading part, the lower end portion of the side wall 120 is bent to enclose an edge of the cap plate, thereby forming a crimping part, which seals the battery can 100.

For example, a sealing gasket may be disposed between the edge of the cap plate and the battery can 100. The sealing gasket may be made of an elastic material. The sealing gasket may be made of an insulating material.

During formation of the crimping part in the battery can 100, the sealing force may be further enhanced by compressing the sealing gasket.

However, the coupling structure of the cap assembly is not limited thereto. The beading part may be omitted from the side wall 120. In this case, the cap assembly may be coupled to the battery can 100 only through the crimping part without the beading part.

Alternatively, the cap assembly may be coupled to the battery can 100 by a method such as laser welding, without using the beading part or the crimping part. In this case, the sealing gasket may also be omitted.

For example, the cap assembly may be electrically connected to the battery can 100. However, it is not limited thereto, and the cap assembly may be electrically insulated from the battery can 100.

Next, the upper structure of the secondary battery will be described in detail.

In some embodiments, the electron transfer unit 300 and the insulation unit 400 may be disposed on the upper side of the electrode assembly 200.

The secondary battery may comprise the electron transfer unit 300. The electron transfer unit 300 may be connected to the cathode 220 and may provide a path for electron transfer during charging and/or discharging of the secondary battery.

The electron transfer unit 300 may comprise a conductive material. For example, the electron transfer unit 300 may comprise a metal material. Specifically, the electron transfer unit 300 may comprise aluminum, nickel, or an alloy thereof.

The electron transfer unit 300 may be disposed to be electrically insulated from the battery can 100. For example, the electron transfer unit 300 may be electrically insulated from the battery can 100 via the insulation unit 400. The electron transfer unit 300 may be spaced apart from the upper wall 110 and the side wall 120 of the battery can 100.

At least a portion of the electron transfer unit 300 may be disposed inside the battery can 100, and the remaining portion may be exposed to the outside of the battery can 100.

In some embodiments, the electron transfer unit 300 may comprise the column part 310 and the bottom part 320. For example, the electron transfer unit 300 may comprise the bottom part 320 connected to the electrode assembly 200 inside of the battery can 100, and the column part 310 extending axially upward from the bottom part 320.

The electron transfer unit 300 may be formed as a single integral unit including the column part 310 and the bottom part 320. In the present disclosure, since the column part 310 and the bottom part 320 of the electron transfer unit 300 are integrally formed, it is not necessary to separately join the bottom part 320 and the column part 310 inside the battery can 100.

The electron transfer unit 300 may be disposed such that the bottom part 320 is located inside the accommodation space of the battery can 100, and the column part 310 passes through the terminal hole 111 of the upper wall 110 from the accommodation space of the battery can 100.

The column part 310 may extend axially upward from one side of the bottom part 320. The column part 310 may be integrally formed with the bottom part 320. The column part 310 may be disposed on the upper side of the electrode assembly 200 at a position corresponding to the central space 210 of the electrode assembly 200.

The column part 310 may be provided in a columnar shape. For example, the column part 310 may have a circular columnar shape with a circular cross section, but is not limited thereto. The diameter of the column part 310 may be smaller than that of the terminal hole 111 formed in the upper wall 110 of the battery can 100. The cross-sectional area of the column part 310 may be smaller than that of the terminal hole 111. The diameter of the column part 310 may be smaller than that of the bottom part 320 described below.

The column part 310 may be pulled out from the accommodation space of the battery can 100 toward the upper side of the upper wall 110 through the terminal hole 111 of the upper wall 110 while the bottom part 320 is coupled to the electrode assembly 200.

That is, during the manufacturing process of the secondary battery in the present disclosure, the column part 310 is inserted into the terminal hole 111 from beneath the upper wall 110. Here, the diameter of the column part 310 is smaller than that of the terminal hole 111, allowing it to pass through the terminal hole 111. However, since the diameter of the bottom part 320 is larger than that of the terminal hole 111, the upward movement of the column part 310 may be limited by the bottom part 320, which is prevented from passing through the terminal hole 111.

Through this manufacturing process, a portion of the upper region of the column part 310 may protrude outside the battery can 100 through the terminal hole 111 of the upper wall 110 of the battery can 100. For example, a portion of the lower region of the column part 310 may be connected to the bottom part 320 and disposed inside the battery can 100, and at least a portion of the upper region may be disposed outside the battery can 100.

At least a partial region of the column part 310 may be disposed outside the battery can 100 and electrically connected to an external component. For example, the column part 310 may serve as the cathode 220 terminal.

In some embodiments, at least a portion of the upper region of the column part 310 may be provided in a rivet form. Typically, an electrode terminal of a secondary battery that is provided in a rivet form is inserted from outside the battery can 100 toward the internal accommodation space, and then coupled to the current collector plate or the electrode assembly 200 by welding within the battery can 100. In this case, since the electrode terminal is inserted from outside to inside, the worker can inspect the insertion process, allowing for easier insertion. However, because the welding process between the electrode terminal and the electrode assembly 200 should be carried out inside the battery can 100, foreign substances such as fumes or dust generated during welding may remain inside the battery can 100.

Accordingly, the present disclosure proposes a structure in which the column part 310, which may serve as the cathode 220 terminal, is pulled out to the outside from inside the battery can 100. In the present disclosure, since the bottom part 320, which has a diameter larger than that of the terminal hole 111, is disposed at the lower end of the column part 310, the upward movement of the column part 310 may be limited. This prevents the column part 310 from being excessively pulled out, thereby enabling easy and stable withdrawal of the column part 310.

In addition, since the column part 310 is integrally formed with the bottom part 320, no separate welding process is required. In particular, even if both the column part 310 and the bottom part 320 are placed inside the battery can 100, it is possible to prevent the generation of foreign substances within the battery can 100 due to the welding process.

For example, the column part 310 may comprise a column body 311 that is integrally formed with the bottom part 320, at least a portion of which is disposed inside the terminal hole 111, and a column arm 312 that is bent radially outward from the column body 311.

The column body 311 may be integrally formed with the bottom part 320 and may extend upward from the bottom part 320. The column body 311 may have a diameter smaller than that of the terminal hole 111. The diameter of the column body 311 may be equal to or smaller than the inner diameter of a neck part 410 of the insulation unit 400 described below.

The column body 311 may be provided in a column shape. For example, the column body 311 may be formed in a cylindrical shape, but is not limited thereto.

At least a portion of a lower end region of the column body 311 may be integrally connected to the bottom part 320 and disposed inside the battery can 100, and at least a portion of an upper end region may be disposed outside the battery can 100 while passing through the terminal hole 111.

The neck part 410 of the insulation unit 400 may be disposed in close contact with an outer circumference of the column body 311. For example, the column body 311 may be pulled out to the outside of the battery can 100 through the terminal hole 111 while being enclosed by the neck part 410 of the insulation unit 400.

The column arm 312 may be disposed on the upper portion of the column body 311. The column arm 312 may be formed on the upper portion of the column body 311, and at least a partial region of the column arm 312 may be disposed outside the battery can 100, so that its shape can be deformed by an external force.

Here, the process of coupling the column arm 312 with the upper wall 110 of the battery can 100 through its shape deformation may be referred to as a riveting process or a caulking process. Any known method may be applied to the riveting process or the caulking process, thus a detailed description thereof is omitted here.

For example, before the riveting process, as shown in FIG. 2, the column arm 312 may be prepared to extend axially upward along the edge of the column body 311. For instance, the column arm 312 may be provided in a cylindrical shape. For instance, the outer diameter of the column arm 312 may be smaller than the diameter of the terminal hole 111. The neck part 410 of the insulation unit 400 may be disposed in close contact with the outer circumference of the column arm 312.

At least a partial region of the column arm 312 may pass through the terminal hole 111 formed in the upper wall 110 of the battery can 100 to be positioned outside the battery can 100. At least a portion of the upper region of the column arm 312 may be deformed by an external force, thereby allowing it to be coupled with the upper wall 110 of the battery can 100.

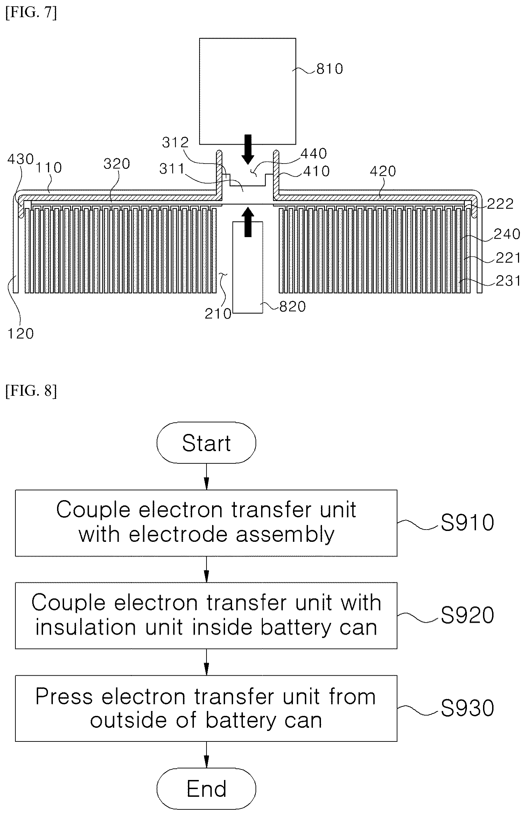

For example, the column arm 312 may be bent radially outward by the pressing force of a first mold (e.g., 810 of FIG. 7) through a riveting process and fixed to the upper wall 110 of the battery can 100. For example, the column arm 312 may be coupled to the upper wall 110 of the battery can 100 using a general riveting method. At this time, the neck part 410 of the insulation unit 400 may be bent together with the column arm 312 and interposed between the column arm 312 and the upper surface of the upper wall 110.

A bottom part 320 may be integrally formed at a lower end of the column body 311. The bottom part 320 may extend radially outward from the lower end of the column body 311.

The bottom part 320 may be provided in a shape corresponding to the shape of the upper surface of the electrode assembly 200. For example, the bottom part 320 may be provided in a circular plate shape. The bottom part 320 may be formed to have a diameter smaller than that of the upper wall 110 of the battery can 100.

The bottom part 320 may be disposed beneath the upper wall 110 inside of the battery can 100. The bottom part 320 may be disposed parallel to the upper wall 110 where the terminal hole 111 of the battery can 100 is formed.

For example, the diameter of the bottom part 320 may be larger than that of the terminal hole 111 of the upper wall 110. When the column part 310 is pulled out to the outside by axially passing through the terminal hole 111, the bottom part 320 cannot pass through the terminal hole 111, thereby limiting axial movement of the column part 310.

The bottom part 320 may be disposed to cover at least a portion of an upper surface region of the electrode assembly 200. The bottom part 320 may be disposed on one side in the axial direction of the electrode assembly 200. The bottom part 320 may be disposed on the upper side of the electrode assembly 200 at a position corresponding to an electrode uncoated part (e.g., the cathode uncoated part 222).

The bottom part 320 may be electrically connected to the uncoated part of the electrode assembly 200. For example, the bottom part 320 may be in contact with and joined to the uncoated part of the electrode assembly 200. Here, the uncoated part of the electrode assembly 200 may be at least one of the cathode uncoated part 222 or the anode uncoated part. For example, the bottom part 320 may be in contact with and joined to the cathode uncoated part 222. For example, the bottom part 320 may be joined to the cathode uncoated part 222 by laser welding, but is not limited thereto. For example, the bottom part 320 may also be coupled to the cathode uncoated part 222 through a separate conductive member.

The bottom part 320 may be electrically connected to the cathode uncoated part 222 to provide a path for electron transfer during charging and/or discharging of the secondary battery.

In the present disclosure, the coupling process between the bottom part 320 and the uncoated part of the cathode 220 may be performed outside the battery can 100. This can prevent the generation of foreign substances within the battery can 100 during the coupling process between the bottom part 320 and the uncoated part of the cathode 220.

The bottom part 320 may be disposed so as to be electrically insulated from the battery can 100. The bottom part 320 may be spaced apart from the side wall 120 of the battery can 100 by a certain distance. For example, an upper surface of the bottom part 320 may be spaced apart from the upper wall 110 of the battery can 100, and a side surface of the bottom part 320 may be spaced apart from the side wall 120 of the battery can 100.

The body part 420 of the insulation unit 400 may be interposed between the bottom part 320 and the battery can 100, thereby preventing the bottom part 320 and the battery can 100 from coming into direct contact. For example, the body part 420 of the insulation unit 400 may be disposed between the bottom part 320 and the upper wall 110 of the battery can 100, and a leg part 430 of the insulation unit 400 may be disposed between the bottom part 320 and the side wall 120 of the battery can 100.

The secondary battery of the present disclosure may comprise the insulation unit 400. The insulation unit 400 may be disposed between the electron transfer unit 300 and the battery can 100. The insulation unit 400 may electrically insulate the electron transfer unit 300 from the battery can 100. The insulation unit 400 may enhance the sealing force when the electron transfer unit 300 is coupled with the battery can 100.

Since the insulation unit 400 of the present disclosure is required to perform both sealing and insulating functions, a material having electrical insulation properties, impact resistance, chemical resistance, and elasticity may be used.

For example, the insulation unit 400 may comprise fluoroelastomer, polyimide, polyphenylene sulfide, ethylene tetrafluoroethylene, polytetrafluoroethylene, polyether ether ketone, polyarylether ketone, and the like, but is not limited thereto.

For example, the insulation unit 400 may be formed of different materials for the neck part 410 and for the body part 420 and the leg part 430, except for the neck part 410.

For example, the neck part 410 of the insulation unit 400 may be made of a material having excellent chemical resistance, airtightness, and heat resistance. The neck part 410 may also be made of nitrile butadiene rubber, ethylene propylene diene monomer rubber, fluoroelastomer, silicone rubber, and the like, but is not limited thereto.

For example, the body part 420 and the leg part 430 of the insulation unit 400 may be made of materials having excellent electrical insulation, chemical resistance, and heat resistance. For example, the body part 420 and the leg part 430 may be made of polypropylene, polyimide, polyphenylene sulfide, polyetheretherketone, and the like, but are not limited thereto.

For example, when the neck part 410 is made of a material different from that of the body part 420 and the leg part 430, except for the neck part 410, the insulation unit 400 may be manufactured by methods such as double injection molding, insert molding, or overmolding, but is not limited thereto.

The insulation unit 400 of the present disclosure may comprise the body part 420, the neck part 410 and the leg part 430. For example, the body part 420, the neck part 410 and the leg part 430 of the insulation unit 400 may be formed as a single integral part.

The body part 420 and the leg part 430 of the insulation unit 400 may be disposed inside the battery can 100, and at least a partial region of the neck part 410 may pass through the terminal hole 111 of the upper wall 110 and may be positioned outside the battery can 100.

The insulation unit 400 may comprise a through-hole 440 through which the column part 310 of the electron transfer unit can pass. Here, the through-hole 440 may comprise a first through-hole 441 formed in the body part 420 and a second through-hole 442 formed in the neck part 410, as described below.

The body part 420 may be disposed inside the battery can 100 to electrically insulate the electrode assembly 200 from the battery can 100. The body part 420 may be provided with a shape corresponding to the upper surface of the electrode assembly 200. For example, the body part 420 may be provided in a circular plate shape.

The body part 420 may be disposed between the upper wall 110 of the battery can 100 and the bottom part 320 of the electron transfer unit 300 within the battery can 100, thereby preventing the bottom part 320 from being electrically connected to the upper wall 110.

The body part 420 may be disposed so that its lower surface faces the upper surface of the bottom part 320 of the electron transfer unit 300.

In addition, the body part 420 may be disposed on the upper side of the electrode assembly 200 to prevent displacement of the electrode assembly 200 and absorb impacts that may be transmitted to the electrode assembly 200.

The first through-hole 441 penetrating in the vertical direction may be formed on one side of the body part 420. For example, the first through-hole 441 may be disposed coaxially with the central axis of the electrode assembly 200 in the body part 420. The column part 310 of the electron transfer unit 300 may be inserted through the first through-hole 441 of the body part 420 from the lower side to the upper side in the axial direction.

The neck part 410 may be disposed on the upper portion of the body part 420. The neck part 410 may extend axially upward from the body part 420 along the periphery of the first through-hole 441 and may be disposed in close contact with the column part 310. The neck part 410 may be integrally formed with the body part 420. For example, the neck part 410 may be provided in a cylindrical shape having a predetermined diameter. The neck part 410 may be interposed between the column part 310 and the upper wall 110 of the battery can 100 to electrically insulate the column part 310 from the battery can 100.

The second through-hole 442 extending in the axial direction may be formed on the inner side of the neck part 410. At least a partial region of the column part 310 of the electron transfer unit 300 may be disposed within the second through-hole 442. The column part 310 may be disposed in close contact with the inner circumferential surface of the neck part 410.

The second through-hole 442 of the neck part 410 may be arranged in communication with the first through-hole 441 of the body part 420. The column part 310 of the electron transfer unit 300 may sequentially pass through the first through-hole 441 and the second through-hole 442 and be drawn out to the outside of the battery can 100. For example, the column part 310 may first pass through the first through-hole 441, which is disposed on a relatively lower side, and then pass through the second through-hole 442, which is disposed on an upper side.

The upper wall 110 of the battery can 100 may be disposed on a radially outer side of the neck part 410. For example, the inner circumferential surface of the terminal hole 111 of the upper wall 110 may be disposed in close contact with the outer circumferential surface of the neck part 410. For example, the neck part 410 may be formed to have an outer diameter corresponding to the diameter of the terminal hole 111.

For example, the neck part 410 may be inserted into the terminal hole 111 of the upper wall 110 from the accommodation space of the battery can 100, and may be disposed such that at least a portion thereof is exposed to the outside of the battery can 100. For example, the neck part 410 may be disposed to extend upward in the axial direction through the terminal hole 111 of the upper wall 110 from below.

At this time, since the body part 420, which is formed to have a diameter larger than that of the terminal hole 111, is disposed at the lower end of the neck part 410, the body part 420 may be seated against the upper wall 110, thereby limiting the upward movement of the neck part 410. This may prevent the neck part 410 from being excessively pulled out to the outside of the battery can 100 during the manufacturing process of the secondary battery, thereby enabling stable assembly.

At least a portion of the upper end region of the neck part 410, which is exposed to the outside of the battery can 100, may be radially outwardly bent and deformed by the column arm 312 of the column part 310.

Specifically, the neck part 410 may comprise a first portion 411 that extends integrally from the body part 420 and is disposed in close contact with the inner circumferential surface of the terminal hole 111, and a second portion 412 that passes through the through-hole 440 from below and is disposed outside the battery can 100.

In the secondary battery assembly process of the present disclosure, the neck part 410 may be assembled to pass through the terminal hole 111 of the upper wall 110 from inside the battery can 100 and to be exposed to the outside of the battery can 100. For example, the second portion 412 of the neck part 410, which is disposed on a relatively upper side, may first pass through the terminal hole 111, and then the first portion 411, which is disposed on a lower side, is positioned inside the terminal hole 111.

The column body 311 of the column part 310 may be disposed at a radially inner side of the first portion 411. The first portion 411 may extend axially from the body part 420 so as to be in contact with the inner circumferential surface of the terminal hole 111.

For example, the first portion 411 of the neck part 410 may be tightly interposed between the inner circumferential surface of the terminal hole 111 and the column body 311 to improve airtightness.

The second portion 412 may be bent and deformed together with the column arm 312 during the bending process caused by an external force. For example, the second portion 412 may extend radially outward from the first portion 411. For example, the second portion 412 may be bent radially outward from an upper end of the first portion 411. The second portion 412 may be tightly interposed between the bent column arm 312 and the upper wall 110 to improve airtightness.

At least a partial region of the first portion 411 and/or the second portion 412 of the neck part 410 may be pressed and compressed by the column part 310. For example, the first portion 411 of the neck part 410 may be compressed against the inner circumferential surface of the terminal hole 111 by the column body 311 inserted from a lower side of the first through-hole 441. For example, the second portion 412 of the neck part 410 may be compressed against the upper surface of the upper wall 110 by the column arm 312, which is pressed by the first mold 810.

Referring to FIG. 1 again, the body part 420, the first portion 411, and the second portion 412 may be integrally formed to enclose at least a partial region of the upper wall 110. For example, when viewed in the cross-section of the secondary battery, the body part 420 of the insulation unit 400, the first portion 411 of the neck part 410, and the second portion 412 may be integrally formed to have an approximately "U" shape.

For example, since the first portion 411 of the neck part 410 is integrally formed along the periphery of the first through-hole 441 of the body part 420, no spaced gap may be formed between the body part 420 and the first portion 411 of the neck part 410. Accordingly, the upper wall 110 of the battery can 100, which defines the terminal hole 111, may be prevented from entering the space between the neck part 410 and the body part 420 of the insulation unit 400.

In the present disclosure, even when warping of the battery can 100 occurs, for example, contact between the electron transfer unit 300 and the upper wall 110 due to the penetration of the upper wall 110 of the battery can 100 between the neck part 410 and the body part 420 of the insulation unit 400 may be prevented. Accordingly, in the present disclosure, gap formation between the neck part 410 and the body part 420 of the insulation unit 400 may be prevented, thereby further enhancing the insulating performance.

In some embodiments, the insulation unit 400 may comprise the leg part 430 disposed along a peripheral edge of the body part 420. For example, the leg part 430 may be integrally formed with the body part 420. For example, the leg part 430 may be provided in a ring shape having a predetermined diameter. For instance, the leg part 430 may extend axially downward from a lower surface of the body part 420.

The leg part 430 may be disposed between the electrode assembly 200 and the side wall 120 of the battery can 100 to prevent the electrode assembly 200 from being electrically connected to the battery can 100. Specifically, the leg part 430 may be disposed to cover a radially outer side of the cathode uncoated part 222 of the electrode assembly 200 and the bottom part 320 of the electron transfer unit 300, which is coupled to the cathode uncoated part 222, thereby preventing the cathode uncoated part 222 and the bottom part 320 from coming into contact with the battery can 100.

A lower partial region of the leg part 430 may be disposed to cover an outer surface of the electrode assembly 200, and an upper partial region of the leg part 430 may be disposed to cover the coupling portion between the cathode uncoated part 222, which protrudes from the electrode assembly 200, and the bottom part 320.

For example, the upper partial region of the leg part 430 may be spaced apart from the coupling portion between the cathode uncoated part 222 and the bottom part 320.

For example, a seating space 450 may be formed between the body part 420 and the leg part 430. Specifically, the seating space 450 may be defined by a lower space of the body part 420 and a radially inner space of the leg part 430.

The seating space 450 of the insulation unit 400 may be formed to house and support at least a portion of the bottom part 320 of the electron transfer unit 300.

For example, the bottom part 320 of the electron transfer unit 300 may be seated in the seating space 450. In the present disclosure, since the bottom part 320 of the electron transfer unit 300 is seated in the seating space 450 of the insulation unit 400 formed of a material having at least elasticity, interference between the battery can 100 and the electron transfer unit 300 that may occur during the battery assembly process can be prevented. For example, interference between the bottom part 320 and the upper wall 110 of the battery can 100 may be prevented by the body part 420 of the insulation unit 400, and interference between the bottom part 320 and the side wall 120 of the battery can 100 may be prevented by the leg part 430 of the insulation unit 400.

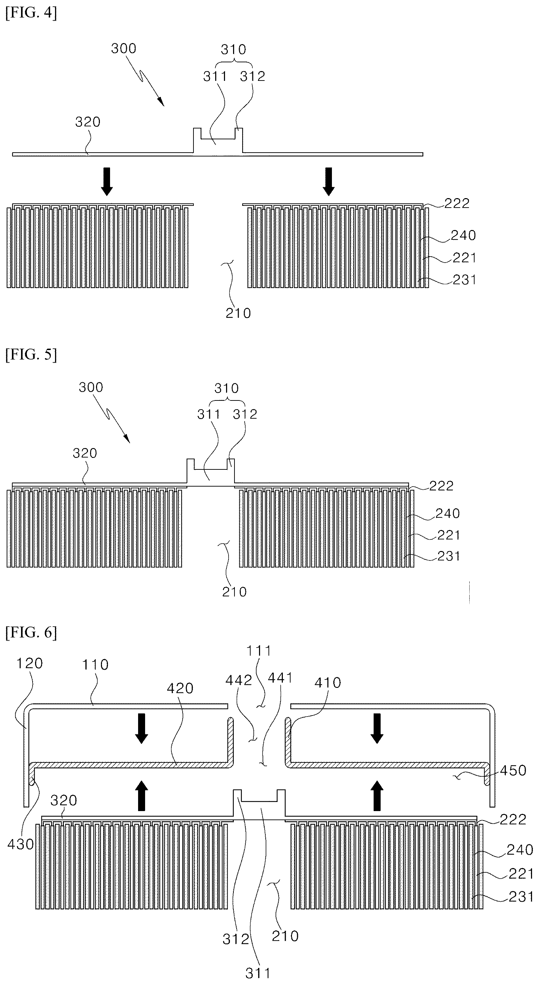

FIGS. 4 to 7 are views schematically illustrating the manufacturing process of a secondary battery according to some embodiments of the present disclosure.

Specifically, FIG. 4 is a view schematically illustrating a process of mounting the integrally formed electron transfer unit 300 on the electrode assembly 200 according to some embodiments of the present disclosure, FIG. 5 is a view schematically illustrating a state in which the bottom part 320 of the electron transfer unit 300 is joined to the cathode 220 terminal of the electrode assembly 200 according to some embodiments of the present disclosure, FIG. 6 is a view schematically illustrating a process of coupling the battery can 100, the electron transfer unit 300 and the insulation unit 400 according to some embodiments of the present disclosure, and FIG. 7 is a view schematically illustrating a riveting process according to some embodiments of the present disclosure.

Hereinafter, the process of manufacturing a secondary battery according to some embodiments of the present disclosure will be described in detail with reference to FIGS. 4 to 7.

In conventional cylindrical secondary batteries, a current collector plate and an electrode terminal are separately provided to form a path for electron transfer.

In a typical cylindrical secondary battery, the separately provided electrode terminal is inserted from outside the battery can 100 toward the internal accommodation space, and a riveting process is performed inside the battery can 100.

In addition, the current collector plate is inserted into the accommodation space while being coupled with the electrode assembly 200, and the current collector is joined to the electrode terminal fixed to the battery can 100 by welding or the like inside the battery can 100.

In such a conventional method, a joining process between the current collector plate and the electrode terminal is required to provide a path for electron transfer. Since this process is performed inside the battery can 100, there is a problem in that foreign substances, such as fumes or dust generated during the joining process, may remain inside the battery can 100.

Accordingly, in various embodiments of the present disclosure, a secondary battery and a method of manufacturing the same may be provided, in which the joining process of components inside the battery can 100 is omitted, thereby facilitating the management of foreign substances within the battery can 100.

First, referring to FIG. 4, the electron transfer unit 300 may be prepared by integrally forming the bottom part 320 having an area sufficient to cover the upper surface of the electrode assembly 200, and the column part 310 extending upward from the bottom part 320.

In the present disclosure, the electron transfer unit 300 may be a component that provides a path for electron transfer from the electrode assembly 200 to an external component.

In the present disclosure, the electron transfer unit 300 may be seated on the upper end of the electrode assembly 200, which is wound in a jelly-roll shape.

Referring to FIG. 5, the electron transfer unit 300 may be coupled with the cathode uncoated part 222, which is exposed on the upper side of the electrode assembly 200. For example, the electron transfer unit 300 may be joined to the cathode uncoated part 222 by ultrasonic welding or laser welding while seated on the upper surface of the electrode assembly 200. However, the joining method is not limited thereto.

The joining process of the electron transfer unit 300 and the cathode uncoated part 222 may be performed outside the battery can 100. Therefore, foreign substances such as fumes or dust that may be generated during the joining process may be prevented from entering the battery can 100.

In various embodiments of the present disclosure, since the entire portion of the electron transfer unit 300 that provides the path for electron transfer is integrally formed, a joining process such as welding for individual components may be omitted, thereby preventing the generation of foreign substances within the battery can 100 and enabling easy foreign substance management.

Referring to FIG. 6, during the manufacturing process of the secondary battery, the electrode assembly 200 may be inserted into the accommodation space of the battery can 100 while the electron transfer unit 300 is coupled to the upper portion thereof.

Subsequently, the above-described insulation unit 400 may be positioned above the electron transfer unit 300. That is, the insulation unit 400 may be disposed between the battery can 100 and the electron transfer unit 300.

The insulation unit 400 and the electron transfer unit 300 may be sequentially disposed beneath the upper wall 110 of the battery can 100. For example, the terminal hole 111 formed in the upper wall 110 of the battery can 100, the through-hole 440 formed in the neck part 410 of the insulation unit 400, and the column part 310 of the electron transfer unit 300 may be disposed coaxially along the central axis of the battery can 100.

In some embodiments, in a state where the insulation unit 400 and the electron transfer unit 300 are sequentially disposed in the internal accommodation space of the battery can 100, the upper wall 110 of the battery can 100, the insulation unit 400 and the electron transfer unit 300 may be coupled in the axial direction such that they are brought into closer contact.

For example, at least a portion of the neck part 410 of the insulation unit 400 may pass through the terminal hole 111 of the upper wall 110 from the lower side to the upper side in the axial direction, and be positioned outside the battery can 100. At this time, since the body part 420, which extends radially with a diameter larger than that of the terminal hole 111, is disposed at the lower portion of the neck part 410, the neck part 410 may be limited from moving upward by the body part 420 being seated against the upper wall 110 of the battery can 100. Accordingly, even if the joining of the insulation unit 400 starts from inside the battery can 100, where visibility is poor, the neck part 410 may be prevented from being excessively pulled out through the terminal hole 111, and a stable assembly can be ensured.

In addition, the column part 310 of the electron transfer unit 300 coupled to the electrode assembly 200 may be disposed such that at least a portion thereof passes through the through-hole 440 of the neck part 410 from the lower side to the upper side in the axial direction and is exposed to the outside of the battery can 100 after being coupled. At this time, since the bottom part 320, which extends radially with a diameter larger than the diameters of the terminal hole 111 and the through-hole 440, is disposed at the lower portion of the column part 310, the upward movement of the column part 310 may be limited by the bottom part 320 seated against the body part 420 of the insulation unit 400. Accordingly, even if the coupling of the insulation unit 400 starts from inside the battery can 100, where visibility is poor, the neck part 410 may be prevented from being excessively pulled out through the terminal hole 111, and a stable assembly can be ensured.

In some embodiments, when the column part 310 of the electron transfer unit 300 is inserted into the through-hole 440 of the insulation unit 400, the bottom part 320, which is disposed at the lower portion of the column part 310, may be seated inside the seating space 450 of the insulation unit 400. For example, the upper surface of the bottom part 320 may be seated against the lower surface of the body part 420 of the insulation unit 400.

During the assembly process of the secondary battery, the bottom part 320 may be seated in the seating space 450 of the insulation unit 400, such that at least a portion of the bottom part 320 is supported by the body part 420 and the leg part 430 of the insulation unit 400. Therefore, in the present disclosure, interference between the battery can 100 and the electron transfer unit 300, which may occur during the assembly process of the secondary battery, may be prevented.

Referring to FIG. 7, in the manufacturing process of a secondary battery according to some embodiments of the present disclosure, the column part 310 of the electron transfer unit 300 may be firmly fitted into the through-hole 440 formed in the neck part 410 of the insulation unit 400. In addition, while the column part 310 is inserted into the through-hole 440, the neck part 410 may be disposed to pass through the terminal hole 111 of the upper wall 110.

At this time, the column part 310 may be inserted axially upward from the lower side through the through-hole 440 of the neck part 410, and the neck part 410 may likewise be inserted axially upward through the terminal hole 111

That is, in the present disclosure, since the electron transfer unit 300 and the insulation unit 400 are each integrally formed, the assembly process of the secondary battery may be performed by merely fitting the respective components inside the battery can 100, and a joining process such as welding within the battery can 100 may be omitted. Accordingly, simplification and improved efficiency of the assembly process of the secondary battery may be achieved.

In some embodiments of the present disclosure, since the column part 310 is fitted via the neck part 410 into the terminal hole 111, the electron transfer unit 300 coupled to the electrode assembly 200 may be prevented from radial movement. In addition, since the bottom part 320 integrally formed with the column part 310 is fixed by the body part 420 of the insulation unit 400 within the seating space 450, the electron transfer unit 300 may be prevented from axial movement.

Referring to FIG. 7 again, the neck part 410 of the insulation unit 400 may be formed to have a height greater than that of the column part 310 disposed within the through-hole 440. The upper portion of the insulation unit 400 may be positioned above the upper portion of the column arm 312. This is to prevent the column arm 312, which is bent during the riveting process, from coming into contact with the upper surface of the upper wall 110.

Meanwhile, the device for manufacturing a secondary battery of the present disclosure may comprise a first mold 810 and a second mold 820, which will be described below, for performing a riveting process.

The first mold 810 of the device for manufacturing a secondary battery may be disposed outside the battery can 100 and may be configured to be movable vertically along the axial direction.

The first mold 810 may be configured to apply a pressing force in an axial downward direction to the electron transfer unit 300, which is disposed inside the battery can 100, at least a partial region of which protrudes to the outside of the battery can 100 through the terminal hole 111.

For example, the first mold 810 may be disposed outside the battery can 100 and may apply a downward pressing force to the upper portions of the column part 310 and the neck part 410. These upper portions protrude outward from the battery can 100 through the terminal hole 111.

The upper portion of the column part 310 and the upper portion of the neck part 410, which protrude outward from the battery can 100 through the terminal hole 111 of the upper wall 110, may be pressed by the first mold 810 and deformed so that their diameters are increased, respectively. Here, the process in which the upper portion of the column part 310 and the upper portion of the neck part 410 are pressed and deformed by the first mold 810 to be fixed to the upper wall 110 may be referred to as a riveting process.

In the present disclosure, through the riveting process, a portion of the upper region of the neck part 410 is deformed by being pressed by the column arm 312, thereby forming the second portion 412 that extends radially outward from the first portion 411, which is seated against the inner circumferential surface of the terminal hole 111.

In a typical cylindrical secondary battery manufacturing process, the riveting process is performed inside the battery can 100, and a portion of the lower region of the electrode terminal is bent by a pressing force applied axially upward from inside the battery can 100. However, when the riveting process is performed inside the battery can 100, it is difficult for a worker to inspect whether a partial region of the electrode terminal has been appropriately deformed, and even if a defect occurs, it is difficult to detect.

In contrast, since the riveting process in the present disclosure is performed outside the battery can 100, the worker may easily inspect whether the column arm 312 of the column part 310 is appropriately deformed, or whether the neck part 410 is appropriately deformed together with the column arm 312, from outside the battery can 100, thereby facilitating defect detection during the manufacturing process.

Meanwhile, in some embodiments, since the riveting process is performed while the electron transfer unit 300 is seated on the upper portion of the electrode assembly 200, there is a risk that the pressing force may be transmitted to the electrode assembly 200 during the process in which the column part 310 is pressed downward by the first mold 810.

Therefore, the device for manufacturing a secondary battery of the present disclosure may comprise the second mold 820, at least a portion of which is disposed inside the battery can 100 to support the electron transfer unit 300 against the downward pressing force exerted by the first mold 810.

The second mold 820 may be disposed inside the battery can 100 to support the electron transfer unit 300 against the downward pressing force exerted by the first mold 810. For example, the second mold 820 may be disposed in the accommodation space of the battery can 100 to support at least a portion of the lower region of the column part 310 of the electron transfer unit 300.

For example, the second mold 820 may be disposed in the central space 210 including a winding central axis of the electrode assembly 200. For example, the central space 210 may be a region in which a mandrel used in the winding process of the electrode assembly 200 is disposed.

In some embodiments, the second mold 820 may be disposed to be movable vertically along the axial direction inside the central space 210. For example, the second mold 820 may be configured to move to a position equal to or higher than the height of the electrode uncoated part (e.g., the cathode uncoated part 222) protruding from the upper side of the electrode assembly 200.

For example, the second mold 820 may support the electron transfer unit 300 at a position equal to or above the cathode uncoated part 222 of the electrode assembly 200. Therefore, in the present disclosure, even if the riveting process is performed while the electron transfer unit 300 is seated on the electrode assembly 200, pressing force can be avoided on the electrode assembly 200.

In addition, in the present disclosure, since the second mold 820 is disposed in the central space 210 of the electrode assembly 200, it may support the lower portion of the column part 310 to which the pressing force is directly applied by the first mold 810. Therefore, in the present disclosure, cracking between the column part 310 and the bottom part 320, which are integrally formed, due to the pressing force exerted by the first mold 810 during the riveting process, may be prevented.

Meanwhile, in some embodiments, the second mold 820 may comprise a slot (not shown) capable of receiving the separator 240 disposed in the central space 210. For example, the slot may be formed concavely downward from the upper surface of the second mold 820, so that at least a partial region of the separator 240 may be housed therein. Accordingly, even if the second mold 820 moves vertically along the axial direction in the central space 210, which is the winding center of the electrode assembly 200, it may move smoothly while avoiding interference with the separator 240.

FIG. 8 is a flowchart of a method for manufacturing a secondary battery according to some embodiments of the present disclosure.

Referring to FIG. 8, the method for manufacturing a secondary battery may comprise an external coupling step (S910) of coupling the electron transfer unit 300 with the electrode assembly 200. Coupling of the electron transfer unit 300 with the electrode assembly 200 may be performed outside the battery can 100.

The method for manufacturing a secondary battery of the present disclosure may comprise an internal coupling step (S920) of coupling the electron transfer unit 300 with the insulation unit 400 inside the battery can 100.

In the internal coupling step (S920), the electrode assembly 200, to which the electron transfer unit 300 is coupled at the upper portion, may be inserted into the accommodation space of the battery can 100. At this time, the above-described insulation unit 400 may be positioned above the electron transfer unit 300.

In the internal coupling step (S920), coupling of the battery can 100, the insulation unit 400, and the electron transfer unit 300 may be performed with the terminal hole 111 formed in the upper wall 110 of the battery can 100, the neck part 410 of the insulation unit 400, and the column part 310 of the electron transfer unit 300 aligned coaxially.

The column part 310 may be inserted into the terminal hole 111 from inside the battery can 100 toward the outside while the electron transfer unit 300 is disposed inside the battery can 100 along with the electrode assembly 200, and at least a portion of the upper region of the column part 310 may pass through the terminal hole 111 and be exposed to the outside of the battery can 100.

For example, the column part 310 may be inserted into the through-hole 440 of the neck part 410, and the neck part 410 may be inserted into the terminal hole 111 of the upper wall 110. In the present disclosure, the column part 310 may be inserted into the terminal hole 111 in a direction from the lower side to the upper side in the axial direction from inside the battery can 100, and the neck part 410 of the insulation unit 400 may be interposed between the column part 310 and the upper wall 110 of the battery can 100, thereby electrically insulating the column part 310 from the upper wall 110.

In the internal coupling step (S920), the electron transfer unit 300 and the insulation unit 400, which are disposed inside the battery can 100, are fitted into the terminal hole 111 of the upper wall 110, thereby ensuring the efficiency of the manufacturing process.

The method for manufacturing a secondary battery of the present disclosure may comprise a riveting step (S930) of performing a riveting process by pressing the column part 310 from outside the battery can 100.

In the riveting step (S930), an axial downward pressing force may be applied to the column part 310, which is exposed to the outside of the battery can 100 through the terminal hole 111 in the internal coupling step (S920), by the first mold 810 disposed on the upper side of the battery can 100. By the pressing of the first mold 810, the column arm 312 of the column part 310 is bent radially outward, thereby being coupled to the upper wall 110 of the battery can 100. At this stage, the neck part 410 of the insulation unit 400 is bent together by the pressing force of the first mold 810, so that the second portion 412 of the neck part 410 is pressed between the column arm 312 and the upper wall 110, thereby allowing the column part 310 and the upper wall 110 to be hermetically sealed.

Meanwhile, the second mold 820 disposed inside the battery can 100 may support the electron transfer unit 300 upward against the downward pressing force of the first mold 810. In the present disclosure, the second mold 820 supports the electron transfer unit 300 at a position equal to or higher than the cathode uncoated part 222 of the electrode assembly 200, thereby preventing the pressing force exerted by the first mold 810 from being transmitted to the electrode assembly 200. In addition, in the present disclosure, the second mold 820 may prevent the separation of the column part 310 and the bottom part 320 integrally formed by supporting a region corresponding to the column part 310 within the central space 210 of the electrode assembly 200.

It should be understood that in various embodiments of the present disclosure, the cathode 220 terminal and the anode 230 terminal are merely illustrative, and may be interchangeable depending on the configuration.

According to the various embodiments of the present disclosure described above, the process of joining components inside the battery can 100 may be omitted, thereby facilitating the management of foreign substances within the battery can 100.

In addition, the present disclosure may reduce the number of components by forming the electron transfer unit as a single integral unit.

In addition, the present disclosure may prevent the battery can 100 from entering the space between the neck part 410 and the body part 420 by forming the insulation unit 400 as a single integral unit, thereby improving insulation performance.

In addition, the present disclosure may enhance the efficiency of the assembly process by performing the assembly inside the battery can 100 through fitting between the electron transfer unit and the insulation unit 400.

In addition, the present disclosure may achieve a reduction in defect rate by performing the riveting process for the column part 310 of the electron transfer unit 300 outside the battery can 100, thereby facilitating inspection of the deformation of the column arm 312.

In the above, although the embodiments of the present disclosure have been described with all components coupled in one or operating in combination, the present disclosure is not necessarily limited to such embodiments. Within the scope of the purpose of the present disclosure, all components may be selectively coupled in one or more and operate accordingly. Unless otherwise defined, all terms including technical or scientific terms have the same meanings as commonly understood by those skilled in the art to which the present disclosure pertains. Commonly used terms, such as those defined in dictionaries, should be interpreted in accordance with the contextual meaning in the relevant technical field, and unless explicitly defined in the present disclosure, shall not be interpreted in an idealized or unduly formal sense.

The above description is merely illustrative of the technical spirit of the present disclosure, and it will be appreciated by those skilled in the art to which the present disclosure pertains that various modifications and alterations can be made without departing from the essential characteristics of the present disclosure. Therefore, the embodiments disclosed herein are intended to describe, not to limit, the technical spirit of the present disclosure, and the scope of the technical spirit is not limited to these embodiments. The scope of protection of the present disclosure shall be defined by the following claims, and all technical ideas that fall within the equivalent scope shall be construed as being comprised within the scope of the present disclosure.

## Claims

1. A secondary battery comprising:
a battery can in which an electrode assembly is housed, and having a terminal hole formed on one side thereof;
an electron transfer unit that is disposed inside the battery can, at least a partial region of which protrudes to the outside of the battery can through the terminal hole; and
an insulation unit interposed between the electron transfer unit and the battery can.

2. The secondary battery according to claim 1, wherein the electron transfer unit comprises a bottom part connected to the electrode assembly inside of the battery can and a column part extending axially upward from the bottom part.

3. The secondary battery according to claim 2, wherein the column part comprises: a column body that is integrally formed with the bottom part, at least a portion of which is disposed inside the terminal hole; and a column arm that is bent radially outward from the column body.

4. The secondary battery according to claim 2 or 3, wherein the bottom part is coupled with an uncoated part of the electrode assembly.

5. The secondary battery according to any one of claims 2 to 4, wherein the bottom part is disposed parallel to an upper wall of the battery can in which the terminal hole is formed, thereby limiting axial movement of the column part.

6. The secondary battery according to any one of claims 2 to 5, wherein the insulation unit comprises: a body part disposed between the bottom part and the upper wall of the battery can in which the terminal hole is formed; and a neck part extending axially upward from the body part and disposed in close contact with the column part.

7. The secondary battery according to claim 6, wherein the neck part comprises: a first portion that extends from the body part and is in close contact with an inner circumferential surface of the terminal hole; and a second portion that extends radially outward from the first portion.

8. The secondary battery according to claim 7, wherein the body part, the first portion and the second portion are integrally formed to enclose at least a partial region of the upper wall.

9. The secondary battery according to claim 6, wherein the column part, the neck part and the terminal hole are disposed coaxially with a central axis of the battery can.

10. The secondary battery according to any one of claims 6 to 9, wherein the insulation unit comprises a leg part that extends axially downward along a periphery of the body part.

11. The secondary battery according to claim 10, wherein the leg part is disposed between the electrode assembly and a side wall of the battery can.

12. The secondary battery according to claim 10 or 11, wherein the insulation unit comprises a seating space defined by a lower space of the body part and a radially inner space of the leg part, and
the bottom part is disposed in the seating space.

13. A method for manufacturing a secondary battery comprising:
an external coupling step of coupling an electron transfer unit comprising a column part and a bottom part, which are integrally formed, with an electrode assembly;
an internal coupling step of coupling the electron transfer unit with an insulation unit inside a battery can; and
a riveting step of pressing at least a portion of the electron transfer unit from outside the battery can,
wherein, in the riveting step, a pressing force is applied to the column part protruding to the outside of the battery can through a terminal hole formed in an upper wall of the battery can during the internal coupling step.

14. The method for manufacturing a secondary battery according to claim 13, wherein the insulation unit comprises: a body part disposed between the bottom part and the upper wall; and a neck part extending from the body part and passing through the terminal hole to enclose the column part, and
in the riveting step, an upper end of the neck part is bent together with at least a partial region of the column part by the pressing force.

15. The method for manufacturing a secondary battery according to claim 13 or 14, wherein, in the riveting step, the pressing force is applied by a first mold disposed outside the battery can, and the electron transfer unit is supported against the pressing force by a second mold disposed inside the battery can.
